(19) Europäisches Patentamt
European Patent Office
Office européen des brevets

(11) Publication number: **0 201 060**
**A2**

(12) # EUROPEAN PATENT APPLICATION

(21) Application number: **86106045.7**

(22) Date of filing: **02.05.86**

(51) Int. Cl.⁴: **B 65 D 81/24**

(30) Priority: **07.05.85 JP 95359/85**
**07.05.85 JP 95360/85**
**07.05.85 JP 95361/85**
**08.05.85 JP 96046/85**

(43) Date of publication of application: **12.11.86**
**Bulletin 86/46**

(84) Designated Contracting States: **DE FR GB**

(71) Applicant: **TEIJIN LIMITED, 11 Minami Honmachi 1-chome Higashi-ku, Osaka-shi Osaka-fu (JP)**

(72) Inventor: **Kuroda, Toshimasa, 1-10-33, Nanpeidai, Takatsuki-shi Osaka (JP)**
Inventor: **Nishimura, Takao, 1-12-21, Tanabe, Kashihara-shi Osaka (JP)**

(74) Representative: **Hoeger, Stellrecht & Partner, Uhlandstrasse 14c, D-7000 Stuttgart 1 (DE)**

(54) **Package of polyester fibers.**

(57) Disclosed is a package of polyester fibers, comprising polyester fibers packaged with a sheet, wherein the sheet contains not more than 0.15% by weight of an amine derivative. Even if this package is stored for a long time, degradation of the physical properties of the polyester fibers is not caused.

**EP 0 201 060 A2**

0201060

# PACKAGE OF POLYESTER FIBERS

## BACKGROUND OF THE INVENTION

### (1) Field of the Invention

The present invention relates to a package comprising polyester fibers packaged with a sheet.

### (2) Description of the Related Art

As the package comprising polyester fibers packaged with a sheet, there has been ordinarily used a package comprising a pirn or cheese of a polyester yarn wound on a bobbin, which is packaged with a sheet such as a thermoplastic resin film. Ordinarily, the sheet of the thermoplastic resin film contains an aliphatic acid amide. If polyester fibers are packaged with a sheet containing this component, when this package is stored for a long time, the physical properties, especially the strength and elongation, are degraded in the polyester fibers wound in the surface portion of the pirn or cheese. Accordingly, at the existing test method for yarns of polyester fibers (specified by the Synthetic Fibers Association of Japan), in order to remove the polyester fibers wound in the surface portion of the pirn or the like, it is stipulated that 2000 m of a polyester fiber yarn should be peeled from the pirn or the like before the test. The labor expense for this peeling operation and the loss of the peeled polyester fibers cannot be neglected.

## SUMMARY OF THE INVENTION

Under this background, we made research on packages of polyester fibers packaged with sheets, and as the result, we have now succeeded in providing a package in which degradation of the physical properties is not caused even in polyester fibers wound in the surface portion.

More specifically, in accordance with the present invention, there is provided a package of polyester fibers, comprising polyester fibers packaged with a

sheet, wherein the sheet contains not more than 0.15% by weight of an amine derivative.

DESCRIPTION OF THE PREFERRED EMBODIMENTS

The polymeric compound constituting the polyester fibers used in the present invention contains ester bond groups

$$(-\underset{\underset{O}{\|}}{C}-O- \text{ or } -O-\underset{\underset{O}{\|}}{C}-).$$

For example, polyethylene terephthalate fibers (PET fibers), polybutylene terephthalate fibers (PBT fibers) and fibers of a known, customarily used copolyester comprising a third component may be used in the present invention. The polyester fibers are sealed and packaged in the form of a yarn wound on a bobbin or cone. However, the polyester fibers need not be in the form of a wound yarn but the fibers may be directly packaged.

A film formed of a thermoplastic resin is used as the sheet. However, the sheet is not limited to a film, but any form can be adopted if the polyester fibers can be sealed and packaged. An olefin resin, especially polyolefin, is preferred as the thermoplastic resin.

By the term "amine derivative" used herein is meant an amine derivative that can be a gaseous amine-generating source, such as an aliphatic or aromatic substituted amine or an acid amide. For example, there can be mentioned stearylamine, palmitylamine, oleylamine, methylene-bis-stearoamine, ethylene-bis-stearoamine, phenyl-α-naphthylamine, phenyl-β-naphthylamine, N,N'-diphenyl-p-phenylene diamine, N-cyclohexyl-N'-phenyl-p-phenylene diamine, stearic acid amide, palmitic acid amide and oleic acid amide. Especially, an aliphatic acid amide is ordinarily used as the polyethylene film-forming lubricant.

If such an amine derivative as described above is contained in the polyester fiber-packaging sheet, the amine derivative undergoes chemical reaction by the action of heat or light to release a gaseous free amine.

The free amine released in the space between the pirn of the polyester fibers and the packaging sheet is caused to react with the ester bond groups

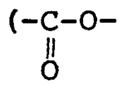 or 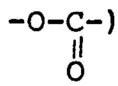

of the polyester fibers by the action of heat or light to decompose the ester bonds. As the result, the physical properties, especially the elongation, of the fibers are degraded.

We investigated the relation between amine derivatives contained in presently available packaging materials for polyester fibers and degradation of physical properties of polyester fibers with the lapse of time, and as the result, it was found that in order to control th degradation with the lapse of time to a practically allowable level, it is necessary that the content of the amine derivative in the polyester fiber-packaging material should be controlled not more than to 0.15% by weight based on the sheet.

It is preferred that the sheet should comprise at least one compound selected from the group consisting of waxes, aliphatic esters and metal soaps.

A wax of the aliphatic hydrocarbon type is preferred as the wax. For example, waxes of the liquid paraffin type and low-molecular-weight polyethylene type are preferably used. As specific examples, there can be mentioned Uniu H350 (supplied by Union Sekiyu), Carlisle 240 Wax (supplied by Carlisle Chemical), Abrilwax (supplied by Abril Industrial Waxes) and AC Polyethylene 617 (having a molecular weight of about 1500 and supplied by Allied Chemical).

An aliphatic ester having a lower alkyl group is preferred as the aliphatic ester. For example, there are preferably used butyl stearate, propyl stearate, amyl stearate and butyl laurate, an butyl stearate is especially preferred. As a specific example, there can be mentioned Rikemal (supplied by Riken Vitamin Oil).

A fatty acid soap having 12 to 30 carbon atoms is preferred as the metal soap. As the fatty acid, there may be used stearic acid, lauric acid and ricinoleic acid. As the metal, there may be used calcium, zinc, lead, barium and cadmium. For example, there are preferably used calcium stearate, calcium laurate and calcium recinoleate.

The content of at least one compound selected form the group consisting of waxes, aliphatic esters and metal soaps in the sheet is up to 2.5% by weight, preferably 0.5 to 2.0% by weight.

Furthermore, it is preferred that an ultraviolet absorber be contained in the sheet. The ultraviolet absorber may be used separately from or in combination with at least one compound selected from the above-mentioned group.

A benzotriazole type compound is preferred as the ultraviolet absorber. As specific examples, there can be mentioned 2-(2'-hydroxy-5'-methylphenyl)-benzotriazone (Sumisorb supplied by Sumitomo Kagaku) and Tinuvin 327 (supplied by Nippon Ciba-Geigy). It is preferred that the ultraviolet absorber be added in an amount of 0.1 to 1.5% by weight.

An ordinary antioxidant may be contained in the sheet. A phenolic antioxidant is preferred. For example, there may be used Antage BHT (supplied by Kawaguchi Kagaku). Sumirizer A (supplied by Sumitomo Kagaku), Irganox 1010 (supplied by Musashino-Geigy) and Ionox 330 (supplied by Shell Chemical).

For incorporating at least one compound selected from the group consisting of waxes, aliphatic esters and metal soaps and/or the ultraviolet absorber into the sheet, there may be adopted a known method. For example, in case of a filmy sheet, the above-mentioned additives are incorporated in the thermoplastic resin, and the thermoplastic resin is then melt-molded into a sheet. Alternatively, there may be adopted a method in which

the additives are applied to a melt-molded sheet in the film-forming process.

The following effects can be attained by the present invention having the above-mentioned structure.

(1) The package of the present invention is advantageous over the conventional package in that the degradation of the physical properties, especially the strength and elongation, of polyester fibers with the lapse of time during the storage can be prevented.

(2) By dint of the effect, even after the package of polyester fibers has been stored for a long time, the physical properties of the polyester fibers can be maintained at practically applicable levels. Therefore, peeling of the surface portion of the wound yarn becomes unnecessary at the yarn test.

The present invention will now be described in detail with reference to the following examples. Incidentally, in the examples, the effect of the present invention was expressed by the change of the elongation with the lapse of time. The elongation was determined by using an ordinary Instron tensile tester.

<u>Examples 1 through 3 and Comparative Examples 1 through 3</u>

Stearic acid amide was incorporated in an amount shown in Table 1 into polyethylene, and a polyethylene film having a thickness of 30 μm was formed according to a customary method. A pirn formed by winding a polyethylene terephthalate fiber yarn having a monofilament denier of 2 and a total denier of 75 on a bobbin was packaged with the film as a packaging sheet (Examples 1 through 3 and Comparative Examples 1 through 3).

The obtained package was stored at a temperature of 25°C and a relative humidity of 65% under irradiation with a light of 600 luxes (fluorescent lamp). The elongation (%) was measured at predetermined time intervals.

The obtained results are shown in Table 1.

Table 1

| | Content (%) of Stearic Acid Amide | Elongation (%) Number of Elapsed Days | | | | |
|---|---|---|---|---|---|---|
| | | 0 | 30 | 60 | 90 | 120 |
| Example 1 | 0 | 32 | 30 | 29 | 28 | 28 |
| Example 2 | 0.05 | 32 | 28 | 27 | 26 | 26 |
| Example 3 | 0.10 | 32 | 26 | 25 | 24 | 23 |
| Comparative Example 1 | 0.15 | 32 | 24 | 22 | 20 | 19 |
| Comparative Example 2 | 0.20 | 32 | 22 | 19 | 17 | 16 |
| Comparative Example 3 | 0.30 | 32 | 18 | 15 | 13 | 12 |

Example 4 and Comparative Example 4

Calcium stearate was incorporated in an amount of 1.5% by weight into polyethylene, and a polyethylene film having a thickness of 30 μm was formed according to a customary method. A package (A) was prepared by packaging a pirn obtained by winding a polyethylene terephthalate fiber yarn having a single filament denier of 2 and a total denier of 75 on a bobbin with the polyethylene film as a packaging sheet (Example 4).

A package (B) was prepared by packaging the same pirn as used in Example 4 with a polyethylene film customarily used for packaging polyester fibers (Comparative Example 4).

Each of the packages (A) and (B) was stored at a temperature of 25°C and a relative humidity of 65% under irradiation with a light of 600 luxes (fluorescent lamp). The elongation (%) was measured at predetermined time intervals. The obtained results are shown in Table 2.

Table 2

| Package | Elongation (%) Number of Elapsed Days | | |
|---|---|---|---|
| | 0 | 20 | 40 |
| (A) | 29 | 26 | 26 |
| (B) | 29 | 20 | 17 |

Example 5 and Comparative Example 5

A package (C) was prepared in the same manner as described in Example 4 except that polyester monofilaments having a monofilament denier of 15 were used (Example 5).

A package (D) was prepared by packaging the same pirn with the film of Comparative Example 4 (Comparative Example 5).

With respect to each of the packages (C) and (D),

the elongation (%) was measured at predetermined time intervals as in Example 4. The obtained results are shown in Table 3.

Table 3

| Package | Elongation (%) Number of Elapsed Days | | |
| --- | --- | --- | --- |
| | 0 | 30 | 60 |
| (C) | 32 | 28 | 26 |
| (D) | 32 | 21 | 18 |

Example 6 and Comparative Example 6

2-(2'-hydroxy-5'-methylphenyl) benzotriazole (Sumisorb supplied by Sumitomo Kagaku) was incorporated in an amount of 0.3% by weight into polyethylene, and a polyethylene film having a thickness of 30 μm was formed as a packaging sheet according to a customary method. A pirn obtained by winding a polyethylene terephthalate fiber yarn having a monofilament denier of 2 and a total denier of 75 on a bobbin was packaged with the sheet to form a package (E) (Example 6).

The same pirn as used in Example 6 was packaged with a polyethylene sheet customarily used for packaging polyester fibers to form a package (F) (Comparative Example 6).

Each of the packages (E) and (F) was stored at a temperature of 25°C and a relative humidity of 65% under irradiation with a light of 600 luxes (fluorescent lamp), and the elongation (%) was measured at predetermined time intervals. The obtained results are shown in Table 4.

Table 4

| Package | Elongation (%) Number of Elapsed Days | | |
|---|---|---|---|
| | 0 | 20 | 40 |
| (E) | 29 | 28 | 27 |
| (F) | 29 | 20 | 18 |

Example 7 and Comparative Example 7

A package (G) was prepared in the same manner as described in Example 6 except that monofilaments having a monofilament denier of 15 were used (Example 7).

A package (H) was prepared by packaging the same pirn with the film of Comparative Example 6 (Comparative Example 7).

With respect to each of the packages (G) and (H), the elongation (%) was measured at predetermined time intervals as in Example 6. The obtained results are shown in Table 5.

Table 5

| Package | Elongation (%) Number of Elapsed Days | | |
|---|---|---|---|
| | 0 | 30 | 60 |
| (G) | 32 | 30 | 28 |
| (H) | 32 | 22 | 18 |

Example 8 and Comparative Example 8

Polyethylene was mixed with 1.5% by weight of calcium stearate, 0.3% by weight of a microcrystalline wax (Carlisle 240 Wax supplied by Carlisle Chemical) and 0.3% by weight of 2-(2'-hydroxy-5'-methylphenyl)benzotriazole (Sumisorb supplied by Sumitomo Kagaku), and the

composition was formed into a film having a thickness of 30 µm as a packaging sheet according to a customary method. A pirn formed by winding a polyethylene terephthalate fiber yarn having a monofilament denier of 2 and a total denier 75 on a bobbin was packaged with the packaging sheet to from a package (I) (Example 8).

The same pirn as used in Example 8 was packaged with a polyethylene film customarily used for packaging polyester fibers to form a package (J) (Comparative Example 8).

Each of the packages (I) and (J) were stored at a temperature of 25°C and a relative humidity of 65% under irradiation with a light of 600 luxes (fluorescent lamp), and the elongation (%) was measured at predetermined time intervals. The obtained results are shown in Table 6.

Table 6

| Package | Elongation (%) Number of Elapsed Days | | |
|---|---|---|---|
| | 0 | 20 | 40 |
| (I) | 29 | 28 | 27 |
| (J) | 29 | 20 | 18 |

Example 9 and Comparative Example 9

A package (K) was prepared in the same manner as described in Example 8 except that monofilaments having a monofilament denier of 15 were used (Example 9).

A package (L) was prepared by packing the same pirn with the film of Comparative Example 8 (Comparative Example 9).

With respect to each of the packages (K) and (L), the elongation (%) was measured at predetermined time intervals as in Example 8. The obtained results are shown in Table 7.

Table 7

| Package | Elongation (%) | | |
|---|---|---|---|
| | Number of Elapsed Days | | |
| | 0 | 30 | 60 |
| (K) | 32 | 30 | 28 |
| (L) | 32 | 22 | 19 |

## CLAIMS

1. A package of polyester fibers, comprising polyester fibers packaged with a sheet, wherein the sheet contains not more than 0.15% by weight of an amine derivative.

2. A package as set forth in claim 1, wherein the sheet is a polyolefin film.

3. A package as set forth in claim 2, wherein the polyolefin is polyethylene.

4. A package as set forth in claim 1, wherein the sheet contains at least one compound selected from the group consisting of waxes, aliphatic esters and metal soaps.

5. A package as set forth in claim 4, wherein the compound is contained in an amount of up to 2.5% by weight based on the sheet.

6. A package as set forth in claim 5, wherein the compound is contained in an amount of 0.5 to 2.0% by weight.

7. A package as set forth in claim 1, wherein the sheet contains an ultraviolet absorber.

8. A package as set forth in claim 7, wherein the ultraviolet absorber is contained in an amount of 0.1 to 1.5% by weight based on the sheet.

9. A package as set forth in claim 4, wherein the sheet contains an ultraviolet absorber.